# EUROPEAN PATENT APPLICATION

(11) **EP 4 827 048 A1**
(43) Date of publication of application: **21.10.2026**
(21) Application number: 25170280.9
(22) Date of filing: 14.04.2025
(51) Int. Cl.: H04L 9/40, H04L 9/32, H04W 12/037, H04W 12/10, H04W 12/106, H04W 80/02

(54) **MAC CE SECURITY PROTECTION**

(71) Applicant: Nokia Technologies Oy, 02610 Espoo (FI)
(72) Inventor: ORKOPOULOS, Stawros, Nersingen (DE)
(74) Representative: Nokia EPO representatives

(57) **Abstract**

Embodiments of the present disclosure provide a solution for MAC CE security protection. In a solution, an apparatus receives or transmits a MAC message including at least one MAC PDU. A MAC PDU of the at least one MAC PDU at least includes: a MAC CE, SDU, and protection related information of the MAC message. The MAC CE SDU includes a payload part, and at least the MAC CE SDU and the protection related information are integrity protected.

## Description

### FIELD

Various example embodiments of the present disclosure generally relate to the field of telecommunication and in particular, to methods, devices, apparatuses and computer readable storage medium for media access control (MAC) control element (CE) security protection.

### BACKGROUND

A communication network may serve as a facility that enables communications between two or more communication devices or provides communication devices access to a data network. A mobile or wireless communication network is one example of a communication network. A communication device may be provided with a service by an application server.

The communication network may operate in accordance with standards such as those provided by Third Generation Partnership Project (3GPP) or European Telecommunications Standards Institute (ETSI). Examples of standards provided by 3GPP are the so-called 3GPP standards for cellular technology generations, such as 3GPP standards for 4G technology, 5G technology, 6G technology etc.

### SUMMARY

In a first aspect of the present disclosure, there is provided an apparatus. The apparatus comprises at least one processor; and at least one memory storing instructions that, when executed by the at least one processor, cause the apparatus at least to: receive or transmit a MAC message, the MAC message comprising at least one MAC protocol data unit (PDU). A MAC PDU of the at least one MAC PDU at least comprises: a MAC CE service data unit (SDU) and protection related information of the MAC message. The MAC CE SDU comprises a payload part, and at least the MAC CE SDU and the protection related information are integrity protected.

In a second aspect of the present disclosure, there is provided a method. The method comprises: receiving or transmitting a MAC message, the MAC message comprising at least one MAC PDU. A MAC PDU of the at least one MAC PDU at least comprises: a MAC CE SDU and protection related information of the MAC message. The MAC CE SDU comprises a payload part, and at least the MAC CE SDU and the protection related information are integrity protected.

In a third aspect of the present disclosure, there is provided an apparatus. The apparatus comprises means for receiving or transmitting a MAC message, the MAC message comprising at least one MAC PDU. A MAC PDU of the at least one MAC PDU at least comprises: a MAC CE SDU and protection related information of the MAC message. The MAC CE SDU comprises a payload part, and at least the MAC CE SDU and the protection related information are integrity protected.

In a fourth aspect of the present disclosure, there is provided a computer readable medium. The computer readable medium comprises instructions stored thereon for causing an apparatus to perform at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates the LTM Cell Switch Command MAC CE;
FIG. 3 illustrates a schematic diagram of the LTM Cell Switch Command MAC CE;
FIG. 4 illustrates a MAC structure overview;
FIG. 5A illustrates an example DL MAC PDU;
FIG. 5B illustrates an example UL MAC PDU;
FIG. 6 illustrates a key hierarchy generation process in 5GS (5G system);
FIG. 7A illustrates an example data ciphering process;
FIG. 7B illustrates an example derivation process of MAC-I/NAS-MAC or XMAC-I/XNAS-MAC;
FIG. 8 illustrates a protocol stack for the support of integrated access and backhaul mobile termination (IAB-MT)'s RRC and NAS connections;
FIG. 9 illustrates a flowchart of an example method for MAC CE security protection implemented at an apparatus in accordance with some example embodiments of the present disclosure;
FIG. 10A illustrates an example MAC CE secured framework according to some embodiments of the present disclosure;
FIG. 10B illustrates another example MAC CE secured framework according to some embodiments of the present disclosure;
FIG. 11A and FIG. 11B illustrate two example processes of key derivation for MAC CE security protection, respectively;
FIG. 12A illustrates example processes of key-stream generation for MAC CE security protection according to some embodiments of the present disclosure;
FIG. 12B illustrates example processes of key-stream generation for MAC CE security protection according to some embodiments of the present disclosure;
FIG. 13 illustrates a simplified block diagram of a device that is suitable for implementing example embodiments of the present disclosure; and
FIG. 14 illustrates a block diagram of an example computer readable medium in accordance with some example embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second," ..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is necessarily performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5G Advanced, 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU). Such architecture can be applied to an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

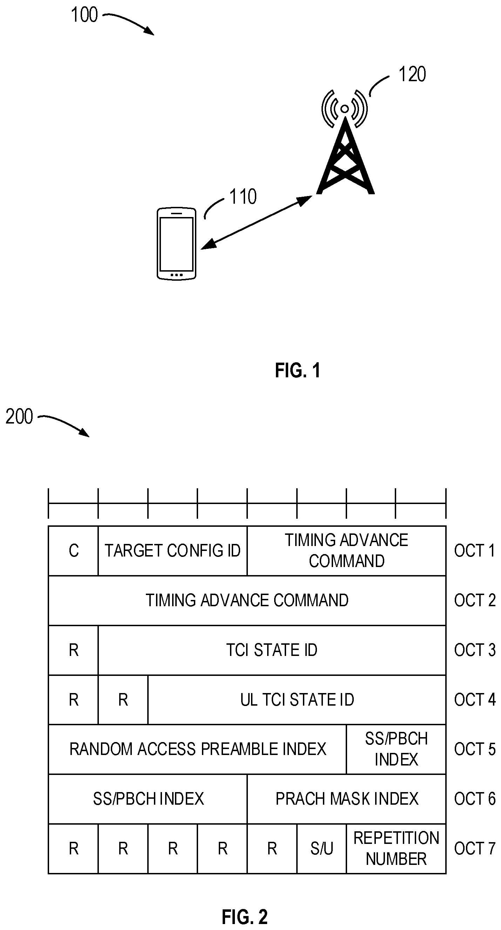

FIG. 1 illustrates an example communication environment 100 in which example embodiments of the present disclosure can be implemented. In the communication environment 100, a plurality of communication devices, including a first apparatus 110 and a second apparatus 120, may communicate with each other. The first apparatus 110 may be a terminal device or a UE. The second apparatus 120 may be a network device, a network node, a BS, a gNB, or an eNB. The first apparatus 110 may communicate with the second apparatus 120 within a coverage of a cell managed by the second apparatus 120.

As used herein, a transmission direction from the second apparatus 120 to the first apparatus 110 is referred to as a downlink (DL), while a transmission direction from the first apparatus 110 to the second apparatus 120 is referred to as uplink (UL).

It is to be understood that the number of apparatuses, devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional apparatuses or devices may be located in the cell, and one or more additional cells may be deployed in the communication environment 100. For example, in FIG. 1, one terminal device is depicted; however, it is to be understood that the communication environment 100 may include additional terminal devices beyond the one shown.

Communications in the communication environment 100 may be implemented according to any proper communication protocol(s), comprising, but not limited to, cellular communication protocols, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future. For example, via artificial intelligence/machine learning (AI/ML) techniques, new waveforms may be developed and employed during the run time.

Ongoing work in 3GPP has introduced advanced features aimed at improving mobility procedures. In particular, there are study items focusing on layer one (L1)/layer two (L2) Triggered Mobility (LTM). Regarding the LTM cell switch command, the MAC layer specification defines a MAC CE frame, as shown in FIG. 2, which illustrates the LTM Cell Switch Command MAC CE 200. The LTM Cell Switch Command MAC CE 200 may include seven octets (OCTs). Each OCT may include one or more fields as shown in FIG.2. For example, the OCT 3 may include a reserved (R) field and a transmission configuration indication (TCI) state identifier (ID) field. For the Inter-CU LTM feature/function, the source gNB sends the MAC CE Cell Switch Command message to the UE so the UE may select or derive relevant session keys for handover. In this context, session keys refer to those used during key handling in handover. For a vertical key derivation, a next hop chaining counter (NCC) value needs to be signaled to the UE.

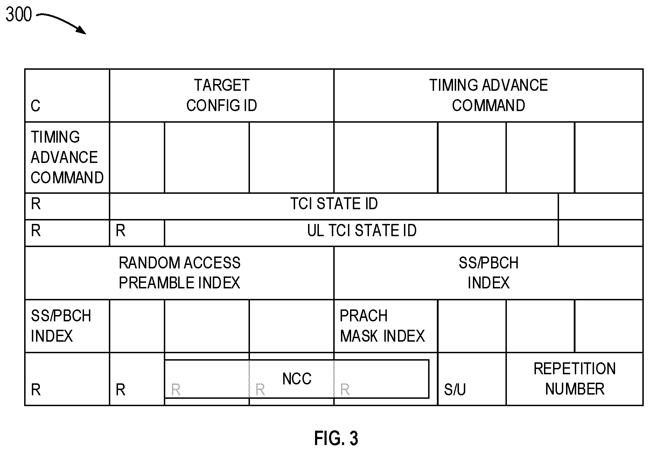

FIG. 3 illustrates a schematic diagram of the LTM Cell Switch Command MAC CE, showing a potential approach for communicating the NCC value via the LTM Cell Switch Command MAC CE frame. As shown in FIG. 3, the NCC value is built upon 3 binary digits. Specifically, three (R)-bits in the LTM Cell Switch Command MAC CE 200 in FIG. 2 may be replaced by the NCC value. The structure shown in FIG. 3 is merely one example; other placements of the NCC value are also possible. However, it is assumed herein that the MAC frame carries the NCC value. From a security perspective, the MAC CE frame is not protected. For example, there is no encryption, no integrity protection, and no replay protection. From a risk assessment standpoint, because the NCC value is used to select the key that is further used to derive session keys, a robust security mechanism is required. Generally, a MAC CE security solution should be made available to different features. In other words, the security solution should be generic, and the protection of the NCC value may be a first use case for the security solution.

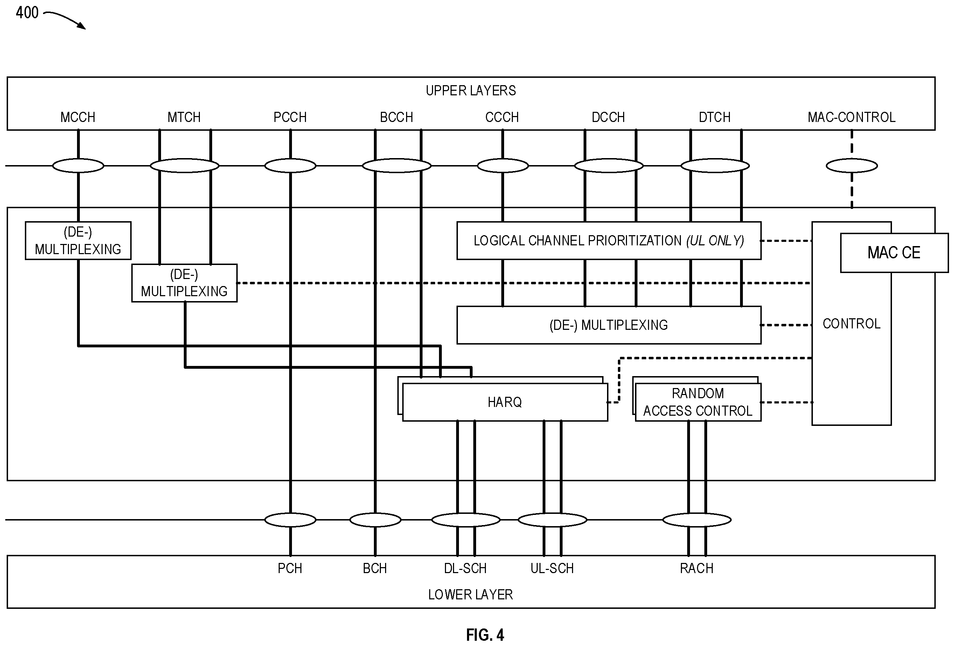

For a more holistic view on the entity level, the MAC layer framework should be considered, i.e., the MAC layer building blocks and the building block that is mainly creating/consuming the MAC CE. FIG. 4 illustrates a MAC structure overview 400 for an apparatus. As shown, a plurality of layers, such as upper layers and lower layers may be specified. A plurality of channels and protocols may be configured for these channels. The MAC CE may be transmitted via a control functional block such as a MAC layer control functional block. The MAC CE values will be created/consumed by the MAC layer control functional block. Various MAC CEs may be created or consumed by the MAC control functional block shown in FIG. 4.

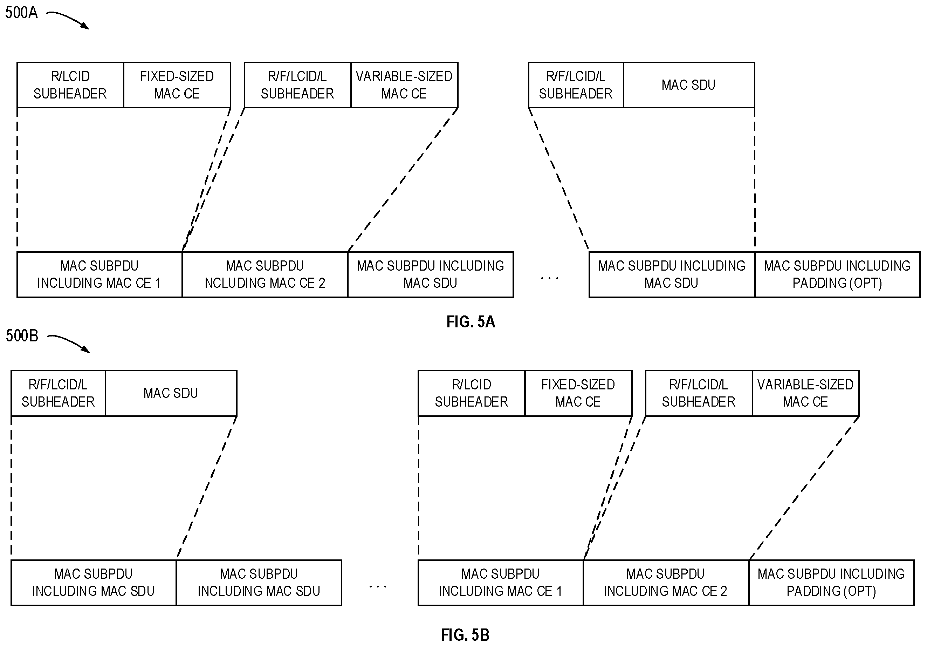

A first high-level review of the defined MAC CEs has shown that not all MAC CEs have the same sensitivity. Hence, not all MAC CEs need to be protected the same way. Thus, a potential solution should take into consideration the introduction of MAC CE channels, where each channel is providing a separate/different level of security. Another aspect is the transmission rate of the MAC CE, i.e., some MAC CEs will be transferred very often, while others will be transferred seldom. This is yet another reason for the introduction of MAC CE channels. The MAC CE values will be transmitted via a transport block (TB). This may be understood with respect to FIG. 5A and FIG. 5B, which illustrate an example DL MAC PDU 500A and an example UL MAC PDU 500B. For DL transmissions, the MAC CE frames will be included in front of the MAC CE SDUs, while for the UL transmissions, these will be appended to the MAC SDUs. However, the MAC CE framework is the same for DL and UL, and the framework does foresee the usage of fixed and variable MAC CE SDU size. Thus, depending on the format, the MAC CE sub-header may or may not require a length value.

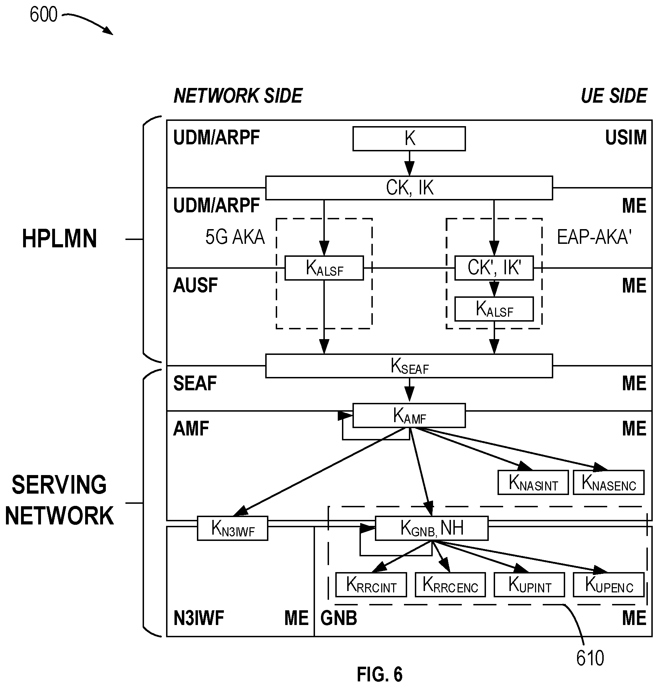

For security reasons, i.e., encryption and integrity protection, there is a need for key-derivation and key-stream generation. The key derivation is used in the context of the 3GPP defined key-hierarchy, as depicted in FIG. 6, which illustrates a key hierarchy generation process 600 in 5GS. Different keys (e.g., K_{RRCint}) are obtained by running the key derivation function (KDF). The KDF is placed inside the radio resource control (RRC). The KDF will be using different inputs for the derivation of the output key. The key-stream generation uses of an algorithm core (e.g., AES, Snow 5G, ZUC) and other related input parameters to compute an output key-stream, which is then XORed with the input bitstream in the clear.

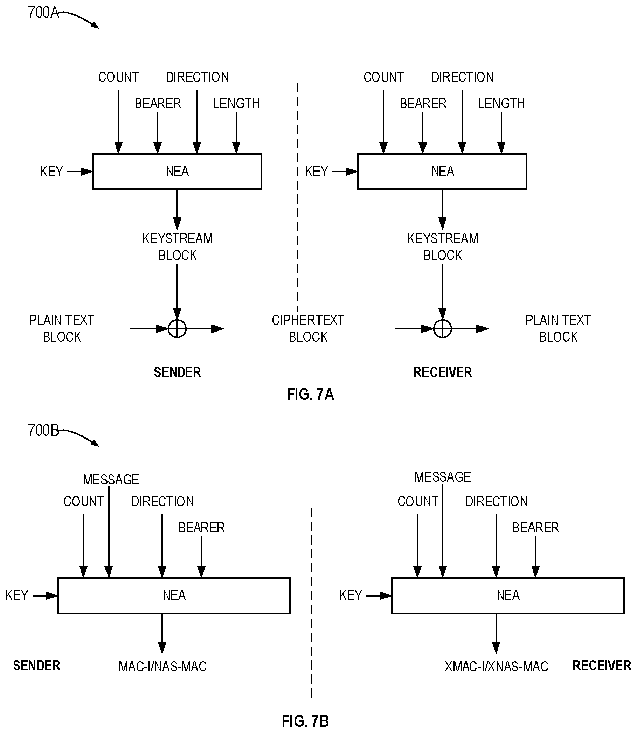

The key-stream generation is different for ciphering (see FIG. 7A, which illustrates an example data ciphering process 700A) and for integrity protection (see FIG. 7B, which illustrates an example derivation process 700B of MAC-I/non-access stratum (NAS)-MAC (or XMAC-I/XNAS-MAC)). As shown in FIG. 7A, at the sender side, a plain text block may be encrypted based on a keystream block to obtain a ciphertext block. The keystream block may be generated based on a key, a count, a bearer, a direction, and a length. At the receiver side, the plain text block may be obtained from the ciphertext block based on the keystream block. Likewise, the keystream block may be generated based on the key, the count, the bearer, the direction, and the length.

As shown in FIG. 7B, at the sender side, the MAC-I or NAS-MAC may be generated based on a key, a count, a message, a direction, and a bearer. At the receiver side, the XMAC-I or XNAS-MAC may be obtained based on the key, the count, the message, the direction, and the bearer.

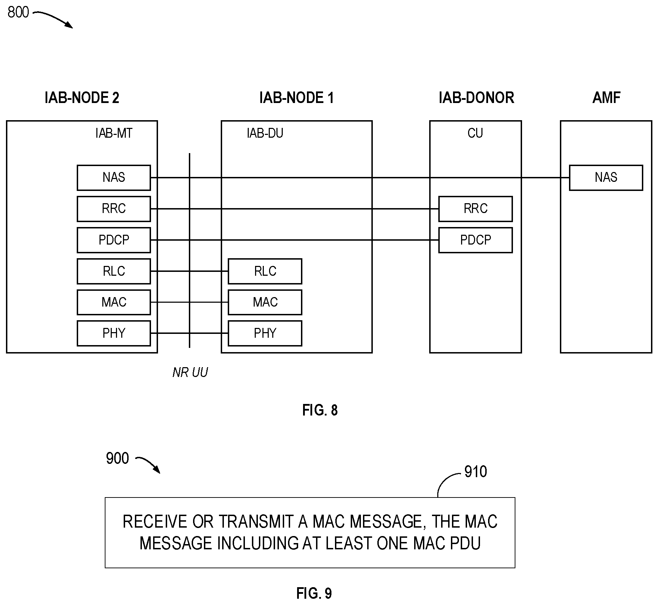

For a more holistic view on system level, the end-to-end RAN/CN architecture should be considered. More specifically, the split-gNB should be considered more carefully, because the introduction of MAC CE security and the key deployment is adding new aspects. FIG. 8 illustrates a protocol stack 800 for the support of IAB-MT's RRC and NAS connections. It should be understood that the protocol stack 800 as shown in FIG. 8 is merely for illustration of the placement of the protocols, and other deployments are also possible. As shown, an IAB-node such as IAB-node 2 (for example, IAB-MT) may communicate with an AMF via an NAS layer. The IAB-node 2 may communicate with an IAB-donor such as CU via RRC layer and packet data convergence protocol (PDCP) layer. In addition, between the IAB-node 2 and another IAB-node such as IAB-node 1 (for example, an IAB-DU), corresponding radio link control (RLC) layers, MAC layers, and physical (PHY) layers are connected. The MAC message such as MAC CE may be transmitted between the IAB-node 1 and IAB-node 2 via the MAC layers.

As mentioned above, the KDF is mapped to the RRC, and the RRC in this deployment is mapped to gNB-CU. The PDCP may be split into PDCPc and PDCPu, and both are processing the de-/encryption and/or integrity protection/verification. There is no clear separation between them. The PDCP in this deployment is mapped to the gNB-CU. In this deployment, key derivation and the key-stream generation are always processed inside the gNB-CU. The KgNB is being protected and maintained always inside the gNB-CU. Now for the introduction of the MAC CE security it might be that key material has to be maintained inside the MAC layer of the gNB-DU.

Several challenges arise when extending security features to MAC CE at the MAC layer. For example, a suitable framework is needed to integrate security operations, such as encryption and/or integrity protection, into existing MAC CE mechanisms. An appropriate key-derivation process is desired to provide the necessary keys for MAC CE protection. The generation and distribution of key-streams for MAC CE security should be carefully managed, especially under split-gNB or other complex network deployments. Also, it is required to introduce replay protection for MAC CE frames to guard against malicious reuse of earlier transmissions.

In accordance with some example embodiments of the present disclosure, there is provided a solution for MAC CE security protection. In a solution, a terminal device receives or transmits a MAC message including at least one MAC PDU. A MAC PDU of the at least one MAC PDU at least includes: a MAC CE SDU, and protection related information of the MAC message. The MAC CE SDU includes a payload part, and at least the MAC CE SDU and the protection related information are integrity protected. As such, security of MAC CE can be strengthened.

FIG. 9 illustrates a flowchart of an example method 900 for MAC CE security protection implemented at an apparatus in accordance with some example embodiments of the present disclosure. For the purpose of discussion, the method 900 will be described from the perspective of the first apparatus 110 in FIG. 1. It is to be understood that the method 900 may also be implemented by the second apparatus 120.

At block 900, the first apparatus 110 receives or transmits a MAC message including at least one MAC PDU. That is, the MAC message may include one MAC PDU or a plurality of MAC PDUs. The at least one MAC PDU includes a first MAC PDU. The first MAC PDU at least includes a MAC CE SDU and protection related information of the MAC message. In some example embodiments, the first MAC PDU may further include header information and a message authentication code, which may be referred to as MAC-I. The header information may be integrity protected and/or encrypted, and the message authentication code may be unencrypted and not integrity protected. The MAC CE SDU includes a payload part, and at least the MAC CE SDU and the protection related information are integrity protected. As such, security of MAC CE can be strengthened. As used herein, an apparatus transmitting a MAC message may be referred to as a transmitter of the MAC message, and an apparatus receiving the MAC message may be referred to as a receiver of the MAC message. If the first apparatus 110 transmits the MAC message, the second apparatus 120 may be a receiver of the MAC message. If the first apparatus 110 receives the MAC message, the second apparatus 120 may be a transmitter of the MAC message. The MAC message may be generated by the transmitter. Information in the MAC message may be derived or obtained by the receiver based on the format of the MAC message.

In some example embodiments, the protection related information may include a security type of the MAC message. For example, the security type of the MAC message may include a SecTag Type, which may be used for security algorithm selection.

In some example embodiments, the protection related information may include a channel identifier indicating a cipher protection of the MAC message and/or a sensitivity of the MAC message. The channel identifier may be referred to as CID, and it may be used for selection of the cipher protection "yes/no" and may also be used for indication of sensitivity of the MAC CE frame. For example, if the channel identifier is less than a threshold, it may indicate that the MAC CE SDU is encrypted and integrity protected; or, if the channel identifier is larger than or equal to the threshold, it may indicate that the MAC CE SDU is integrity protected without being encrypted. That is, small CID value may indicate more sensitive MAC CE, while a larger value might be for lower sensitivity. The sensitivity could be compared to high sensitivity, is integrity and encryption, while lower sensitivity is integrity only.

In some example embodiments, the protection related information may include a MAC layer sequence number for replay protection. The sequence number may be referred to as SIN, which may be a MAC layer specific sequence number used for replay protection.

In some example embodiments, the protection related information may include a length of secured MAC CE in the MAC message. This value may be used to indicate whether there is a secured MAC CE frame. For example, if the length of secured MAC CE is zero, it may indicate that there is no secured MAC CE in the MAC message; or, if the length of secured MAC CE is greater than zero, it may indicate a size of the MAC CE SDU or a size of secured MAC CE in the MAC message.

As mentioned above, the MAC message may include a plurality of MAC PDUs. In some example embodiments, the at least one MAC PDU may further include a second MAC PDU that is different from the first MAC PDU. For example, the second MAC PDU may be the last PDU in the MAC message, and the first MAC PDU may is placed before the second MAC PDU. In some example embodiments, the MAC CE SDU and the second MAC PDU may be integrity protected. Additionally or alternatively, the MAC CE SDU and the second MAC PDU may be encrypted. The second MAC PDU may include at least one header and at least one MAC CE.

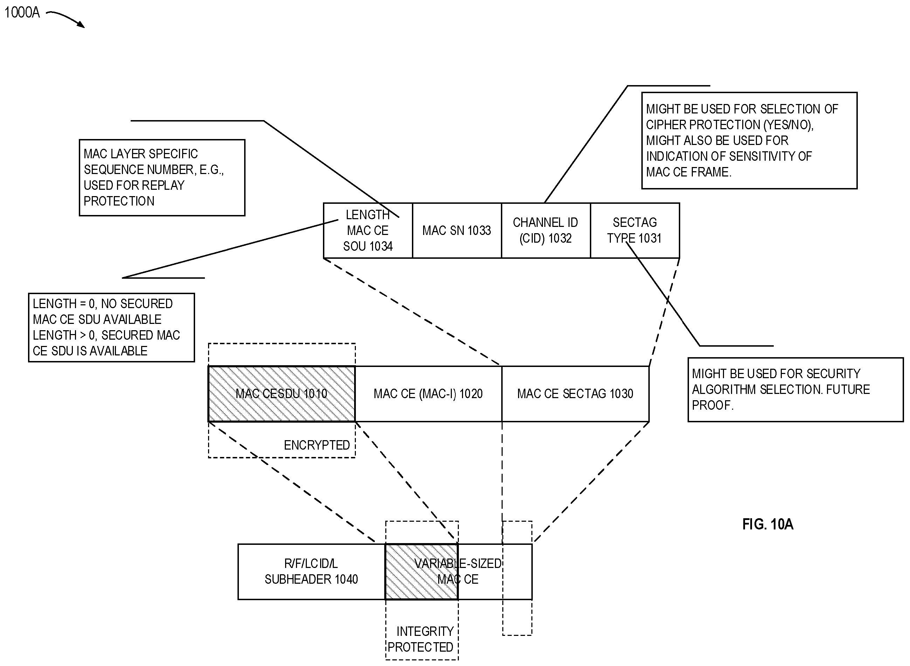

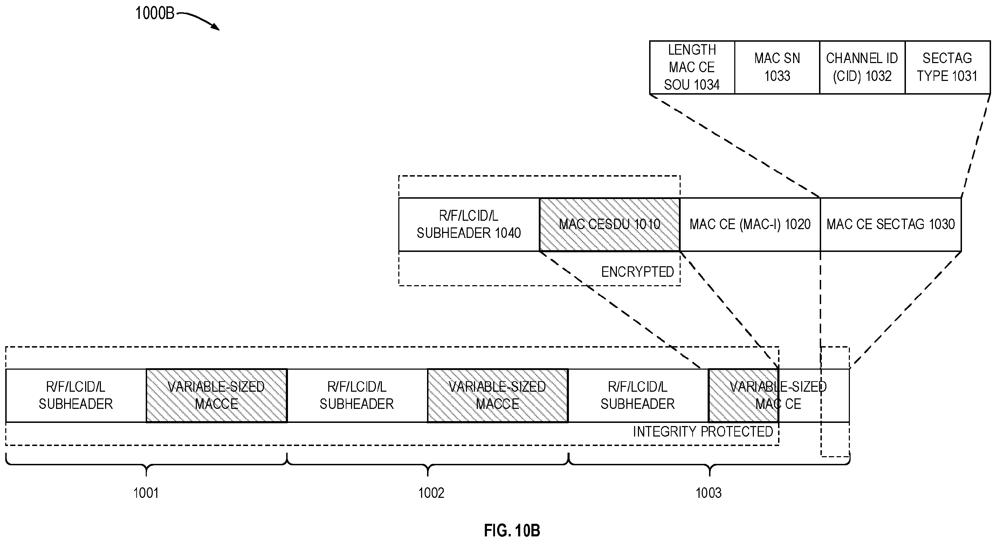

The protection mechanism(s) for security of MAC CE provided herein may be better understood with respect to FIG. 10A and FIG. 10B. FIG. 10A illustrates an example MAC CE secured framework 1000A according to some embodiments of the present disclosure. As shown in FIG. 10A, the MAC message may include a single MAC PDU. The MAC PDU may include a MAC CE SDU 1010, a MAC-I 1020, and a MAC CE SecTag 1030. The MAC-I 1020 may be referred to the message authentication code and may not be integrity protected. The MAC CE SDU 1010 may include the control element related information, and may be integrity protected and optionally encrypted. In this scenario, the protection is per MAC CE SDU, which means the protection mechanism(s) covers the MAC CE SDU 1010.

The MAC CE SecTag 1030 may include a SecTag type 1031, a channel identifier (CID) 1032, a sequence Number (SN) 1033, and/or a length value 1034. Herein, the MAC CE SecTag 1030 may itself be referred to as protection related information. Also, each of or any combination of the SecTag type 1031, the channel identifier (CID) 1032, the sequence Number (SN) 1033 and the length value 1034 may be referred to as protection related information. In some examples, the SecTag 1030 may always be at the end. The receiver of the MAC message may obtain the information elements from the relevance perspective starting from right-to-left. This arrangement may make it possible to adapt fields such as the SN 1033 or the length value 1034 in the future according to new requirements.

The SecTag type 1031 may be used for security algorithm selection. The CID 1032 may be used for selection of the cipher protection "yes/no" and may also be used for indication of sensitivity of the MAC CE frame. For example, a small CID value may indicate a more sensitive MAC CE, while a larger CID value may indicate a lower sensitivity. For example, a higher level of sensitivity may require both integrity protection and encryption, whereas a lower level of sensitivity may only require integrity protection. The SN 1033 may be a MAC layer specific sequence number, and it may be used for replay protection. The length value 1034 may be used to indicate whether there is a secured MAC CE frame. For example, if the length value 1034 is equal to zero, it may indicate that there is no secured MAC CE; or if length value 1034 is greater zero. it may indicate the size of the secured MAC CE frame.

The MAC PDU may further include a sub-header 1040. The sub-header 1040 may also be integrity protected. That is, the sub-header 1040 may be included under integrity protection as well. However, since the sub-header 1040 does not contain confidential information, it may be unencrypted (although it is still possible to encrypt the sub-header if needed). In this scenario, the encryption protection is per MAC CE SDU and the integrity protection is per MAC PDU.

FIG. 10B illustrates another example MAC CE secured framework 1000B according to some embodiments of the present disclosure. As shown in FIG. 10B, the MAC message may include three MAC PDUs 1001-1003 (instead of one single MAC PDU as in FIG. 10A). The very last MAC CE PDU 1003 among the three MAC PDUs may include the MAC-I 1020 and the SecTag 1030. The other two PDUs, although they do not contain the MAC-I 1020 or the SecTag 1030, may still be integrity protected and/or encryption protected under the same overall security mechanism. In this example, the MAC CE SDU 1020 may be encrypted while the MAC CE PDUs 1001-1003 may be integrity protected. Again, as mentioned above, the sub-header 1040 may be encrypted as well as needed. In this scenario, the protection is per MAC CE Frame, which means the protection mechanism(s) covers the entire MAC CE Frame as a whole.

The design(s) may also ensure that legacy devices (regardless of terminal devices or network devices) do not crash or fail upon receiving the proposed security features, even if they lack the capability to verify the enhanced protection(s). As explained above, the MAC frame may include the sub-header and the associated MAC CE block. The overall structure of the MAC frame is not changed for backward compatibility purposes. There is still a MAC CE that may be of fixed or variable size. The corresponding headers remain as previously specified, and the existing (R)-bit(s) is not used.

When a legacy device receives the integrity protected MAC CE frame, the legacy device may be able to read and interpret this frame, since the sub-header is not encrypted. Also, since the location of the MAC SDU is immediate after the sub-header, the legacy device may be able to read and interpret the SDU. The legacy device may be able to read but not interpret the SecTag and the MAC-I. In this case, the SecTag and the MAC-I may be discarded by the legacy device. It can be seen that the MAC CE frame design(s) may be used to multicast/broadcast MAC CE frames that are integrity protected only, which can be read and interpreted by both legacy devices and further devices.

When the legacy device receives a ciphered and integrity protected MAC CE frame. The legacy device may be able to read and interpret the frame, since the sub-header is not encrypted. However, for subsequent information elements, they cannot be interpreted by the legacy device because they cannot be decrypted by the legacy device. In this case, all the elements that cannot be interpreted may be discarded by the legacy device.

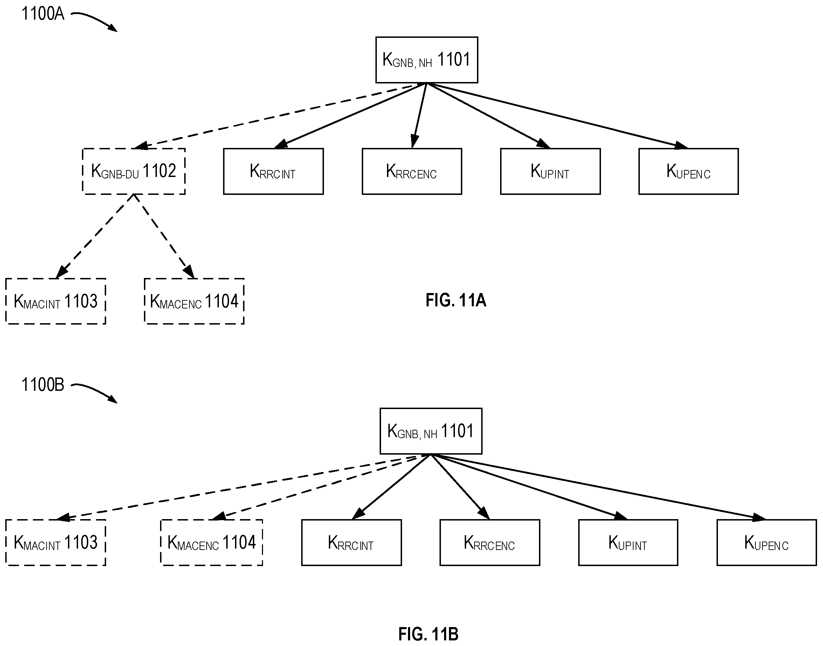

The present disclosure further provides key-derivation mechanism(s) for MAC CE security. In some example embodiments, a first key may be derived for an encrypted part in the MAC message, and a second key may be derived for an integrity protected part in the MAC message. The proposed key-derivation mechanism(s) may be better understood with respect to FIG. 11A and FIG. 11B, which illustrate two example processes 1100A and 1100B of key derivation for MAC CE security protection, respectively. The first key may include the key K_{MACENC} 1104 and the second key may include the key K_{MACINT} 1103, as shown in FIG. 11A and FIG. 11B.

The processes 1100A and 1100B may represent two options for deriving the keys K_{MACINT} 1103 and K_{MACENC} 1104. In the second option represented by the process 1100B, the keys K_{MACINT} 1103 and K_{MACENC} 1104 may be created directly out of K_{gNB, NH} 1101. In the first option represented by the process 1100A, the key K_{gNB-DU} 1102 may be created from the key K_{gNB, NH} 1101, and the key K_{gNB-DU} 1102 may then be used to compute the keys K_{MACINT} 1103 and K_{MACENC} 1104. It can be understood that the key K_{gNB-DU} 1102 is used as an example of a parameter that may be computed per entity. In this example, the parameter is computed for a DU. In another example, the parameter may be computed for a CU and may be referred to as the key K_{gNB-CU}. In some other examples, the parameter may be computed for any other entity that processes the MAC CE security. The K_{gNB, NH} 1102 may not be exposed to outside of its origin placement for security concerns. The processes 1100A and 1100B may be integrated in the key hierarchy generation process 600. For example, the section labeled 610 (outlined by a dashed line) as shown in FIG. 6 may be replaced by either of the processes 1100A and 1100B.

The present disclosure further provides key-stream generation and distribution mechanism(s) for MAC CE security. Key-stream generation mechanism(s) for encryption are provided herein. In some example embodiments, the first apparatus 110 may determine a count value based on a MAC layer sequence number and a MAC hyper frame number (HFN). The first apparatus 110 may determine a bearer based on a channel identifier. The first apparatus 110 may determine a key stream based on the count value, the bearer and the first key. The first apparatus 110 may encrypt the MAC CE SDU based on the key stream. Then, the first apparatus 110 may transmit the MAC message to the second apparatus 120.

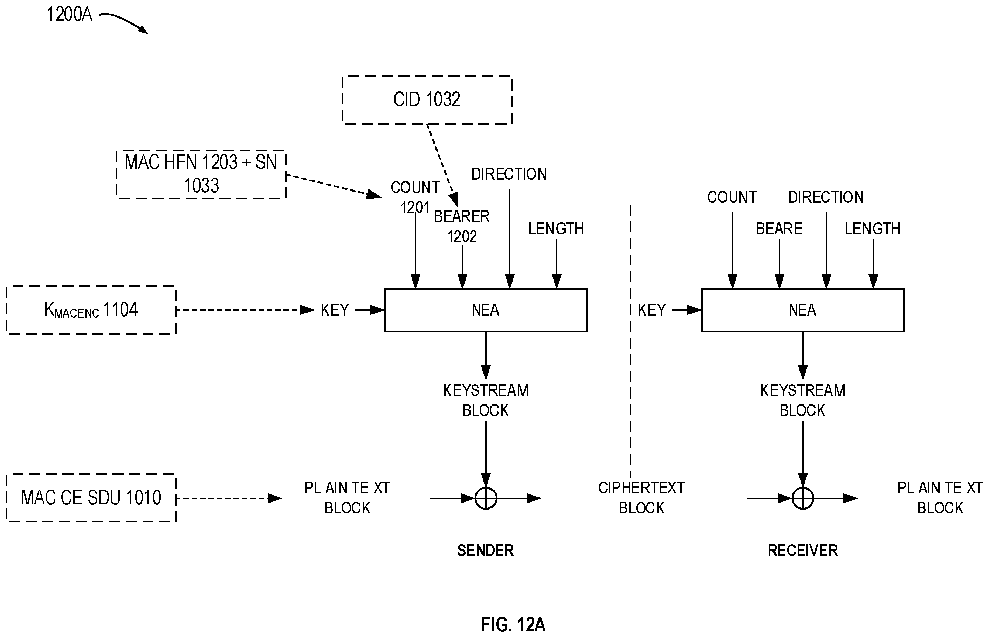

The key-stream generation mechanism(s) for encryption may be better understood with respect to FIG. 12A which illustrates example processes 1200A of key-stream generation for MAC CE security protection according to some embodiments of the present disclosure. As shown in FIG. 12A, the count value 1201 may be determined based on the MAC HFN 1203 and the SN 1033. The values of the MAC HFN 1203 and the SN 1033 may be used for replay protection. Additionally, these two values may be used for key-stream revocation. The bearer 1202 may be determined based on the CID 1032. The CID 1032, as used herein, may be the same as the one assigned by a lower layer, or it may be separate from the one assigned by the lower layer. The key stream may be determined based on the count value 1201, the bearer 1202 and the K_{MACENC} 1104. Then, the MAC CE SDU 1010 may be encrypted based on the key stream.

Additionally, key-stream generation mechanism(s) for integrity protection are provided herein. In some example embodiments, the first apparatus 110 may determine a count value based on a MAC layer sequence number and a MAC HFN 1203. The first apparatus 110 may determine a bearer based on a channel identifier. The first apparatus 110 may determine a key stream based on the count value, the MAC CE frame, the bearer and the second key. For example, the MAC-I may be generated. Then, the first apparatus 110 may transmit the MAC message to the second apparatus 120.

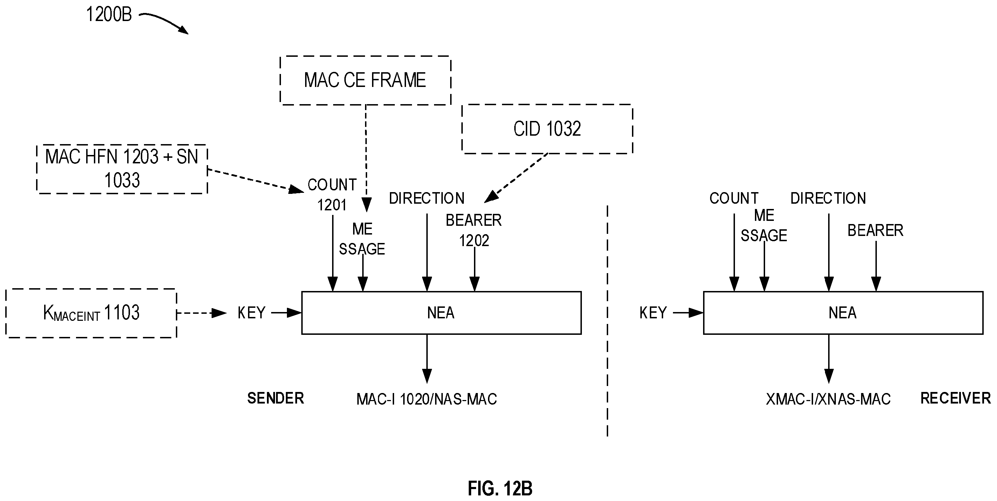

The key-stream generation mechanism(s) for integrity protection may be better understood with respect to FIG. 12B which illustrates example processes 1200B of key-stream generation for MAC CE security protection according to some embodiments of the present disclosure. As shown in FIG. 12B, the count value 1201 may be determined based on the MAC HFN 1203 and the SN 1033. The values of the MAC HFN 1203 and the SN 1033 may be used for replay protection. Additionally, these two values may be used for key-stream revocation. The bearer 1202 may be determined based on the CID 1032. The CID 1032, as used herein, may be the same as the one assigned by a lower layer, or it may be separate from the one assigned by the lower layer. The key stream may be determined based on the count value 1201, the bearer 1202, the MAC CE frame and the K_{MACINT} 1103. For example, the MAC-I 1020 may be generated. Then, the first apparatus 110 may transmit the MAC message to the second apparatus 120. In this case, the complete MAC CE frame may be integrity protected, except the MAC-I 1020.

The present disclosure further provides replay protection mechanism(s) for MAC CE security. In some example embodiments, the first apparatus 110 may receive the MAC message from the second apparatus 102 within a receiving window. The first apparatus 110 may perform a replay protection for the MAC message based on a MAC layer sequence number included in the protection related information.

In some examples, the anti-replay protection may be provided on a higher layer. For the replay protection, the MAC HFN 1203 and MAC SN 1033 may be used. The receiving side (for example, the first apparatus 110) may span a receiving window and wait for new MAC CE frames. If the received MAC CE frame is inside the window size, then the MAC CE frame will be used for further processing, else if the MAC CE frame will be discarded. In some examples, the anti-replay protection may be provided on MAC Layer. In this case, the MAC SN 1033 may be used for the replay protection. In some examples, the anti-replay protection may be provided by means of MAC CE specific information elements. In context of the L1/L2 triggered mobility, there is an approach to include the NCC value inside the MAC CE Cell switch command. In this case, this NCC value (currently it is 3 bits) may be used by the receiving entity for detection of replays.

It should be understood that the methods for MAC CE security protection and the frame structures proposed herein may be used on multiple types of MAC CE, including but not limited to:
- Semi-Persistent (SP) Channel State Information Reference Signal (CSI-RS)/ Channel State Information Interference Measurement (CSI-IM) Resource Set Activation/Deactivation MAC CE;
- Aperiodic CSI Trigger State Subselection MAC CE;
- Transmission Configuration Indicator (TCI) States Activation/Deactivation for UE-specific Physical Downlink Shared Channel (PDSCH) MAC CE;
- TCI State Indication for UE-specific Physical Downlink Control Channel (PDCCH) MAC CE;
- SP CSI reporting on Physical Uplink Control Channel (PUCCH) Activation/Deactivation MAC CE;
- Enhanced SP CSI reporting on PUCCH Activation/Deactivation MAC CE;
- SP Sounding Reference Signal (SRS) Activation/Deactivation MAC CE;
- PUCCH spatial relation Activation/Deactivation MAC CE;
- Enhanced PUCCH spatial relation Activation/Deactivation MAC CE;
- SP Zero-Power (ZP) CSI-RS Resource Set Activation/Deactivation MAC CE;
- Recommended Bit Rate MAC CE;
- Enhanced SP/ Aperiodic (AP) SRS Spatial Relation Indication MAC CE;
- SRS Pathloss Reference RS Update MAC CE;
- PUSCH Pathloss Reference RS Update MAC CE;
- Serving Cell set based SRS Spatial Relation Indication MAC CE;
- SP Positioning SRS Activation/Deactivation MAC CE;
- Timing Delta MAC CE;
- Guard Symbols MAC CEs;
- Positioning Measurement Gap Activation/Deactivation Command MAC CE;
- PPW Activation/Deactivation Command MAC CE;
- PUCCH spatial relation Activation/Deactivation for multiple Transmission Reception Point (TRP) PUCCH repetition MAC CE;
- PUCCH Power Control Set Update for multiple TRP PUCCH repetition MAC CE;
- Unified TCI States Activation/Deactivation MAC CE;
- Differential Koffset MAC CE;
- Case-7 Timing advance offset MAC CE;
- DL TX Power Adjustment MAC CEs;
- Child Integrated Access and Backhaul Distributed Unit (IAB-DU) Restricted Beam Indication MAC CE;
- Timing Case Indication MAC CE;
- PSI-Based SDU Discard Activation/Deactivation MAC CE;
- Beam Failure Detection Reference Signal (BFD-RS) Indication MAC CE;
- Integrated Access and Backhaul Mobile Termination (IAB-MT) Recommended Beam Indication MAC CE;
- UL Power Spectral Density (PSD) range adjustment for IAB MAC CE;
- Case-6 Timing Request MAC CE;
- Network Controlled Repeater (NCR) Backhaul Link Beam Indication MAC CEs;
- NCR Access Link Beam Indication MAC CE;
- Enhanced Unified TCI States Activation/Deactivation MAC CE;
- LTM Cell Switch Command MAC CE;
- Candidate Cell TCI States Activation/Deactivation MAC CE;
- Aggregated SP Positioning SRS Activation/Deactivation MAC CE.

In some example embodiments, an apparatus capable of performing any of the method 900 (for example, the first apparatus 110 or the second apparatus 120 in FIG. 1 may comprise means for performing the respective operations of the method 900. The means may be implemented in any suitable form. For example, the means may be implemented in a circuitry or software module. The apparatus may be implemented as or included in the first apparatus 110 or the second apparatus 120 in FIG. 1.

In some example embodiments, the apparatus comprises means for receiving or transmitting a MAC message, the MAC message comprising at least one MAC PDU. A MAC PDU of the at least one MAC PDU at least comprises: a MAC CE SDU and protection related information of the MAC message. The MAC CE SDU comprises a payload part, and at least the MAC CE SDU and the protection related information are integrity protected.

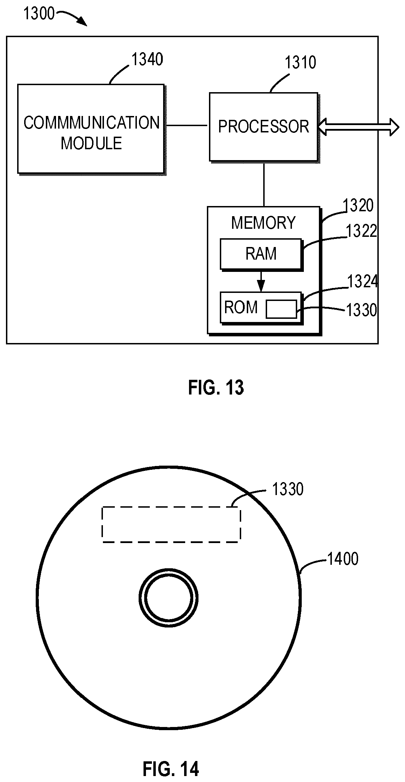

FIG. 13 is a simplified block diagram of a device 1300 that is suitable for implementing example embodiments of the present disclosure. The device 1300 may be provided to implement a communication device, for example, the first apparatus 110 or the second apparatus 120 as shown in FIG. 1. As shown, the device 1300 includes one or more processors 1310, one or more memories 1320 coupled to the processor 1310, and one or more communication modules 1340 coupled to the processor 1310.

The communication module 1340 is for bidirectional communications. The communication module 1340 has one or more communication interfaces to facilitate communication with one or more other modules or devices. The communication interfaces may represent any interface that is necessary for communication with other network elements. In some example embodiments, the communication module 1340 may include at least one antenna.

The processor 1310 may be of any type suitable to the local technical network and may include one or more of the following: general purpose computers, special purpose computers, microprocessors, digital signal processors (DSPs) and processors based on multicore processor architecture, as non-limiting examples. The device 1300 may have multiple processors, such as an application specific integrated circuit chip that is slaved in time to a clock which synchronizes the main processor.

The memory 1320 may include one or more non-volatile memories and one or more volatile memories. Examples of the non-volatile memories include, but are not limited to, a Read Only Memory (ROM) 1324, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1322 and other volatile memories that will not last in the power-down duration.

A computer program 1330 includes computer executable instructions that are executed by the associated processor 1310. The instructions of the program 1330 may include instructions for performing operations/acts of some example embodiments of the present disclosure. The program 1330 may be stored in the memory, e.g., the ROM 1324. The processor 1310 may perform any suitable actions and processing by loading the program 1330 into the RAM 1322.

The example embodiments of the present disclosure may be implemented by means of the program 1330 so that the device 1300 may perform any process of the disclosure as discussed with reference to FIG. 9. The example embodiments of the present disclosure may also be implemented by hardware or by a combination of software and hardware.

In some example embodiments, the program 1330 may be tangibly contained in a computer readable medium which may be included in the device 1300 (such as in the memory 1320) or other storage devices that are accessible by the device 1300. The device 1300 may load the program 1330 from the computer readable medium to the RAM 1322 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 14 shows an example of the computer readable medium 1400 which may be in form of CD, DVD or other optical storage disk. The computer readable medium 1400 has the program 1330 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
at least one processor; and
at least one memory storing instructions that, when executed by the at least one processor, cause the apparatus at least to:
receive or transmit a medium access control, MAC, message, the MAC message comprising at least one MAC protocol data unit, PDU,
wherein a MAC PDU of the at least one MAC PDU at least comprises: a MAC control element, CE, service data unit, SDU, and protection related information of the MAC message,
wherein the MAC CE SDU comprises a payload part, and at least the MAC CE SDU and the protection related information are integrity protected.

2. The apparatus of claim 1, wherein the protection related information comprises at least one of:
a security type of the MAC message,
a channel identifier indicating at least one of: a cipher protection of the MAC message, or a sensitivity of the MAC message,
a MAC layer sequence number for replay protection, or
a length of secured MAC CE in the MAC message.

3. The apparatus of claim 2, wherein the length of secured MAC CE being zero indicates no secure MAC CE being in the MAC message, and/or
the length of secured MAC CE being greater than zero indicates a size of the MAC CE SDU, or a size of secured MAC CE in the MAC message.

4. The apparatus of claim 2, wherein the channel identifier being less than a threshold indicates that the MAC CE SDU is encrypted and integrity protected, and/or
the channel identifier being larger than or equal to the threshold indicates that the MAC CE SDU is integrity protected without being encrypted.

5. The apparatus of any of claims 1-4, wherein the at least one MAC PDU comprises the MAC PDU and at least one further MAC PDU, and the MAC CE SDU and the at least one further MAC PDU is integrity protected and/or encrypted.

6. The apparatus of claim 5, wherein the at least one further MAC PDU comprises at least one header and at least one MAC CE.

7. The apparatus of claim 5, wherein the MAC PDU is the last PDU in the MAC message.

8. The apparatus of any of claims 1-7, wherein the MAC PDU further comprises header information and a message authentication code.

9. The apparatus of claim 8, wherein the header information is integrity protected and/or encrypted, and wherein the message authentication code is unencrypted and not integrity protected.

10. The apparatus of any of claims 1-9, wherein a first key is derived for an encrypted part in the MAC message, and a second key is derived for an integrity protected part in the MAC message.

11. The apparatus of claim 10, wherein the apparatus is further caused to:
determine a count value based on a MAC layer sequence number and a MAC hyper frame number, HFN;
determine a bearer based on a channel identifier;
determine a key stream based on the count value, the bearer and the first key;
encrypt the MAC CE SDU based on the key stream; and
transmit the MAC message to a further apparatus.

12. The apparatus of claim 10, wherein the apparatus is further caused to:
determine a count value based on a MAC layer sequence number and a MAC hyper frame number, HFN;
determine a bearer based on a channel identifier;
generate the MAC message based on the count value, the bearer, the second key and a MAC CE frame, the MAC CE frame excluding a message authentication code;
transmit the MAC message to a further apparatus.

13. The apparatus of any of claims 1-12, wherein the apparatus is further caused to:
receive the MAC message from a further apparatus within a receiving window; and
perform a replay protection for the MAC message based on a MAC layer sequence number included in the protection related information.

14. The apparatus of any of claims 1 to 9, wherein the apparatus comprises a terminal device transmitting the MAC message to or receiving the MAC message from a network device, or
wherein the apparatus comprises a network device transmitting the MAC message to or receiving the MAC message from a terminal device.

15. A method comprising:
receiving or transmitting a medium access control, MAC, message, the MAC message comprising at least one MAC protocol data unit, PDU,
wherein a MAC PDU of the at least one MAC PDU at least comprises: a MAC control element, CE, service data unit, SDU, and protection related information of the MAC message,
wherein the MAC CE SDU comprises a payload part, and at least the MAC CE SDU and the protection related information are integrity protected.

16. A apparatus comprising:
means for receiving or transmitting a medium access control, MAC, message, the MAC message comprising at least one MAC protocol data unit, PDU,
wherein a MAC PDU of the at least one MAC PDU at least comprises: a MAC control element, CE, service data unit, SDU, and protection related information of the MAC message,
wherein the MAC CE SDU comprises a payload part, and at least the MAC CE SDU and the protection related information are integrity protected.

17. A computer readable medium comprising instructions stored thereon for causing an apparatus at least to perform the method of claim 15.
